# EUROPEAN PATENT APPLICATION

(11) **EP 1 367 420 A1**
(43) Date of publication of application: **03.12.2003**
(21) Application number: 02291306.5
(22) Date of filing: 29.05.2002
(51) Int. Cl.: G02B 6/42

(54) **Optical module**

(71) Applicant: CORNING INCORPORATED, Corning, N.Y. 14831 (US)
(72) Inventor: Morrow, Alan John, Corning, NY 14830 (US); Ramel, Romain, 38120 St. Egrève (FR); Scotta, Felix, 77176 Savigny Le Temple (FR)
(74) Representative: Poole, Michael John

(57) **Abstract**

An optical submodule (100) includes an optical assembly (104), an input port (110) and an output port (112). The input (110) accepts an input optical fiber (120) and retains the input optical fiber (120) in proper orientation with respect to the optical assembly (104). The output port (112) accepts an output optical fiber and retains the output optical fiber (122) in proper orientation with respect to the optical assembly (104). In one embodiment, the input and output optical fibers (120,122) each include a collimating lens (106,108). In another embodiment, the collimating lenses (106,108) for the input and output optical fibers (112,122) are included within the optical assembly (104).

## Description

### Background of the Invention

### FIELD OF THE INVENTION

The present invention is generally directed to an optical module and, more specifically, to a optical submodule for fiber optic communication and includes the combination of such submodule with optical fibers, optical devices incorporating the submodule, and optical links based on the same inventive concept.

### TECHNICAL BACKGROUND

Traditionally, optical modules, e.g., amplifier modules, have included optical fiber pigtails for each input and output signal. For example, an amplifier module housing twenty optical submodules has generally included forty optical fiber pigtails, i.e., an input optical fiber and an output optical fiber for each optical submodule. It should be appreciated that connecting such an amplifier module to one or more light source modules and light receiver modules has required a number of operations to be performed on each of the input and output optical fibers. These operations require care and directly impact the performance of each optical submodule within the amplifier module.

In a typical installation operation, each of the input optical fibers, output optical fibers and system optical fibers, that are to be joined to the input and output optical fibers, are cut to a desired length and marked for stripping. The fibers to be joined are then stripped, cleaved, cleaned and inserted within a splice protector. The splice operation is then performed at which point the splice is visually inspected and tested to determine the loss attributable to the splice, with each of the splice losses being recorded. The fibers and splice protector are then retained and an adhesive is injected inside the splice protector at which point ultraviolet (UV) light is generally applied to cure the adhesive.

In general, the splicing operation is subject to variability, which can adversely impact the optical performance of the optical amplifiers and the optical system in which the optical amplifiers are utilized. Further, the performance of an optical system that includes one or more amplifier modules, installed according to the above-described steps, is highly dependent upon the quality of the work performed, and thus the individual implementing the above-described tasks.

Thus, what is needed is a practical optical submodule that reduces the variability in optical performance, attributable to splicing of fiber pigtails associated with currently available optical modules, of an associated optical system.

### Summary of the Invention

The present invention is generally directed to an optical submodule that includes an optical assembly, an input port and an output port. The input port accepts an input optical fiber and retains the input optical fiber in proper orientation with respect to the optical assembly. The output port accepts an output optical fiber and retains the output optical fiber in proper orientation with respect to the optical assembly. In one embodiment, the input and output optical fibers each include a collimating lens. In another embodiment, the collimating lens for both the input and output optical fibers is included within the optical assembly. The optical assembly may perform a wide variety of functions, such as isolation, circulation, filtering, attenuation, polarization, beam splitting, amplification, among other such functions.

According to another embodiment of the present invention, an optical link is provided for coupling a first optical submodule to a second optical submodule. The optical link includes a spatial filter that receives an optical signal from the first optical submodule and provides the optical signal to the second optical submodule.

Additional features and advantages of the invention will be set forth in the detailed description which follows and will be apparent to those skilled in the art from the description or recognized by practicing the invention as described in the description which follows together with the claims and appended drawings.

It is to be understood that the foregoing description is exemplary of the invention only and is intended to provide an overview for the understanding of the nature and character of the invention as it is defined by the claims. The accompanying drawings are included to provide a further understanding of the invention and are incorporated and constitute part of this specification. The drawings illustrate various features and embodiments of the invention which, together with their description serve to explain the principals and operation of the invention.

### Brief Description of the Drawings

Fig. 1 is a side view, in partial cross-section, of an exemplary optical submodule, according to one embodiment of the present invention;
Fig. 2 is a side view, in partial cross-section, of an exemplary optical submodule, according to another embodiment of the present invention;
Fig. 3 is a side view, in partial cross-section, of an optical submodule, according to yet another embodiment of the present invention;
Fig. 4 is a side view, in partial cross-section, of an optical submodule, according to still another embodiment of the present invention;
Fig. 5 is a cross-sectional view of an exemplary optical link coupling two optical submodules, according to one embodiment of the present invention;
Fig. 6 is a top view of an exemplary cassette that contains a number of optical submodules that may be constructed according to Figs. 1, 2, 3 and/or 4; and
Fig. 7 is a block diagram of an exemplary optical system that contains an optical module cassette that contains a number of optical submodules that may be constructed according to Figs. 1, 2, 3 and/or 4.

### Detailed Description of the Preferred Embodiment

An optical submodule constructed according to the present invention includes an optical assembly, an input port and an output port. The optical assembly may perform a wide variety of functions, such as isolation, circulation, filtering, attenuation, polarization, beam splitting, amplification, among other such optical functions. The input port accepts an input optical fiber and retains the input optical fiber in proper orientation with respect to the internal optical assembly. The retention of the input optical fiber within the input port may be achieved in a variety of manners, e.g., through the use of an adhesive. The output port accepts an output optical fiber and retains the output optical fiber in proper orientation with respect to the optical assembly. The retention of the output optical fiber within the output port may also be achieved in a variety of manners, e.g., through the use of an adhesive. Retaining the input and output optical fibers within ports is advantageous as this obviates the need for splicing to optical fiber pigtails that extend from existing optical component modules. As such, the number of splices in an optical device can generally be greatly reduced, which typically results in improved performance of the optical device and yields an optical device that is easier to maintain and troubleshoot as the optical fibers may be maintained in a more orderly manner.

The input and output optical fibers may each include a properly oriented collimating lens or the collimating lenses may be incorporated within the optical submodule. It should be appreciated that it may be desirable to attach the collimating lenses at the ends of the input and output optical fibers as the tolerances of the dimensions of the ports can then generally be relaxed.

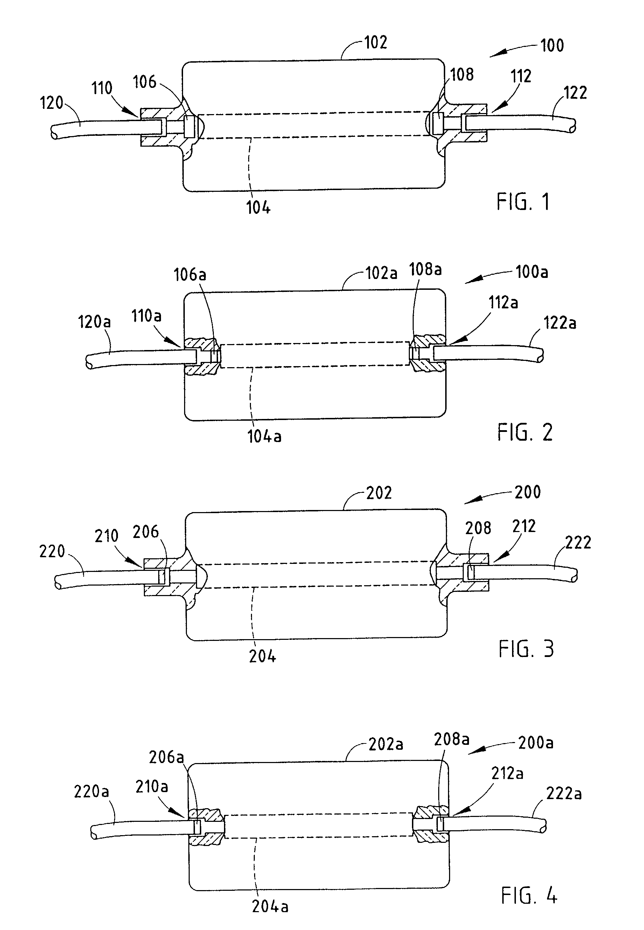

Fig. 1 depicts an optical submodule 100, according to one embodiment of the present invention. As shown in Fig. 1, the submodule 100 includes a housing 102 that is configured to retain an optical assembly 104, an input collimating lens 106 and an output collimating lens 108. The housing 102 also includes an input port 110 for receiving an input optical fiber 120 and an output port 112 for receiving an output optical fiber 122. Ports 110 and 112 and the housing 102 may be made of a wide variety of materials, e.g., plastic and metal. The ports 110 and 112 are generally cylindrical and have an inside diameter that is selected to receive a stripped fiber of an application appropriate fiber type. The optical assembly 104 may perform a wide variety of optical functions and may be, for example, an optical isolator chip, an optical circulator chip, a gain flattening filter, a thin film filter, a variable optical attenuator, a polarization beam splitter, a wavelength plate, a prism, a grating, a mirror, a dynamically adjustable active optical material or a polarizing material.

According to the present invention, the input fiber 120 is inserted into the input port 110, which is dimensionally configured to receive a properly prepared fiber (of a given fiber type), which is retained within the port 110 with, for example, an ultra-violet (UV) cured adhesive. Similarly, the output fiber 122 is inserted into the port 112 and retained within the port 112 with, for example, a UV cured adhesive. It should be appreciated that the ports 110 and 112 may be integrally formed with their respective housings or may be sleeves that are attached to a housing, which is configured to receive the sleeves. Due to the configuration of the optical submodule 100, active alignment of the fiber 120 to the lens 106 and the fiber 122 to the lens 108 is not required. Fig. 2 depicts an optical submodule 100a that is similar to the submodule 100, with the exception that input port 110a and output port 112a extend within the ends of housing 102a, as opposed to protruding from the housing.

Fig. 3 illustrates an optical submodule 200, according to another embodiment of the present invention. As shown in Fig. 3, an input fiber 220 includes a collimating lens 206 attached (e.g., with an optical adhesive) to an end of the fiber 220. Likewise, an output fiber 222 includes a collimating lens 208 attached to an end of the fiber 222. Similar to the submodule 100 of Fig. 1, the submodule 200 of Fig. 3 includes a housing 202, which retains an optical assembly 204 in proper orientation to an input port 210 and an output port 212. The input port 210 is fashioned to receive and retain the optical fiber 220 (including the lens 206) in proper orientation to the assembly 204. Similarly, the port 212 is configured to receive and retain the optical fiber 222 (including the lens 208) in proper orientation to the assembly 204.

The optical assembly 204 may also perform a wide variety of optical functions and may be, for example, an optical isolator chip, an optical circulator chip, a gain flattening filter, a thin film filter, a variable optical attenuator, a polarization beam splitter, a wavelength plate, a prism, a grating, a mirror, a dynamically adjustable active optical material or a polarizing material. It should be appreciated that the above list is not exhaustive and that other types of optical functions may be performed by the optical assembly 204. By actively aligning the lens 206 with the optical fiber 220 before passively inserting the fiber 220 into the port 210, the tolerances of alignment are generally appreciably increased over submodules that integrate collimating lenses. For example, in submodules that have a collimating lens attached to an end of a fiber, the fiber may be misaligned within an input or output port by, for example, as much as ten microns. In contrast, the alignment of a fiber within an input or output port of a submodule that includes collimating lenses may require tolerances within one micron to achieve similar losses to submodules that have the collimating lens directly coupled to an end of an input or output optical fiber. Fig. 4 depicts an optical submodule 200a that is similar to the submodule 200, with the exception that input port 210a and output port 212a extend within the ends of housing 202a, as opposed to protruding from the housing.

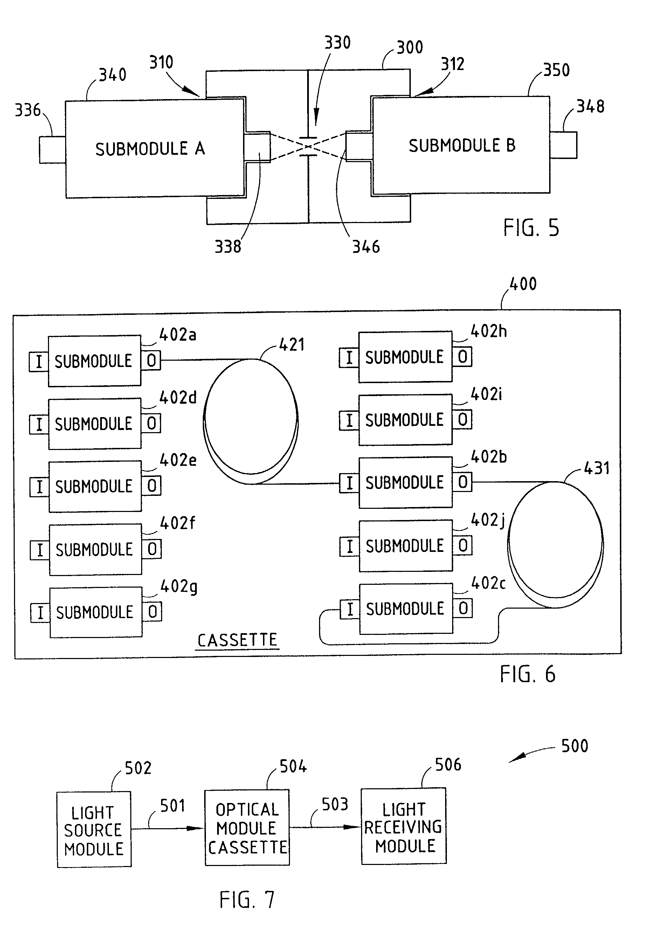

Fig. 5 illustrates an optical link 300, which is utilized to couple an optical submodule 340 to an optical submodule 350. It should be appreciated that utilizing such an optical link obviates the need for connecting the submodules with an optical fiber. However, in this configuration, the optical link 300 must act as a waveguide for a received optical signal. As shown in Fig. 5, the link 300 includes an input port 310 for receiving an end of the submodule 340, which may include an input lens 336 and an output lens 338. The submodule 350, which may include an input lens 346 and an output lens 348, is received by an output port 312 of the optical link 300. Alternatively, the lenses 338 and 346 may be incorporated within the link 300. As shown, the link 300 includes a spatial filter 330, which is designed to act as a waveguide in providing an optical signal received from the submodule 340 to the submodule 350. It should be appreciated that the link 300 can be made of a wide variety of materials such as, for example, metal, plastic or a ceramic.

Fig. 6 shows an optical cassette 400, which retains a plurality of optical submodules 402a-402j constructed to include input and output (I and O) ports designed according to one or more of the embodiments disclosed in Figs. 1, 2, 3 and 4. As shown in Fig. 6, a submodule 402a is coupled to a submodule 402b, via a fiber 421. The submodule 402b is also coupled to a submodule 402c, with a fiber 431. It should be appreciated that the fiber types, as well as the fiber lengths can be selected for optimization in a particular application. In contrast, commercially available optical submodules with optical fiber pigtails have frequently utilized optical fibers that may not be optimal for a given application.

Fig. 7 illustrates a block diagram of an exemplary optical device 500, which includes a light source submodule 502 that is coupled, by one or more optical fibers 501, to components of a cassette 504, which may include one or more optical submodules constructed according to one or more of Figs. 1, 2, 3 and 4. One or more optical fibers 503 may couple one or more components of the cassette 504 to the light receiver module 506.

Accordingly, a number of optical submodules have been described herein that retain input and output optical fibers within ports, which obviates the need for optical fiber pigtails that extend from the submodule. As such, the number of splices in an optical device can advantageously be greatly reduced, which generally results in improved performance for an associated optical system.

In one embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly.

In another embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly. The optical assembly includes at least one of an optical isolator chip, an optical circulator chip, a gain flattening filter, a thin film filter, a variable optical attenuator, a polarization beam splitter, a wavelength plate, a prism, a grating, a mirror, a dynamically adjustable active optical material and a polarizing material.

In another embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly. In this embodiment, the input and output optical fibers each include a collimating lens.

In another embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly. In this embodiment, he optical assembly includes an input collimating lens positioned for receiving the input optical signal from the input optical fiber and an output collimating lens positioned for providing the output optical signal to the output optical fiber.

In another embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly. This embodiment further includes a housing for retaining the optical assembly, and the input port and the output port are formed as an integral part of the housing.

In another embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly. This embodiment further includes a housing for retaining the optical assembly, and the input port and the output port are formed as an integral part of the housing. In this embodiment, the input port and the output port extend from the housing.

In another embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly. This embodiment further includes a housing for retaining the optical assembly, and the input port and the output port are formed as an integral part of the housing. In this embodiment, the input port and the output port are recessed in the housing.

In another embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly. This embodiment further includes a housing for retaining the optical assembly, and the input port and the output port are formed as an integral part of the housing. In this embodiment, the housing is made of one of a metal and a plastic.

In one embodiment, the present invention includes an optical submodule. The optical submodule includes an optical assembly, an input port for accepting an input optical fiber and retaining the input optical fiber in proper orientation with respect to the optical assembly, and an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly. In this embodiment, the input and output optical fibers are respectively retained within the input and output ports with an adhesive.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. The optical device also includes a light receiver module coupled to the output optical fiber, the light receiver module receiving the output optical signal.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. The optical device also includes a light receiver module coupled to the output optical fiber, the light receiver module receiving the output optical signal. In this embodiment, the optical assembly includes at least one of an optical isolator chip, an optical circulator chip, a gain flattening filter, a thin film filter, a variable optical attenuator, a polarization beam splitter, a wavelength plate, a prism, a grating, a mirror, a dynamically adjustable active optical material and a polarizing material.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. The optical device also includes a light receiver module coupled to the output optical fiber, the light receiver module receiving the output optical signal. In this embodiment, the input and output optical fibers each include a collimating lens.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. In this embodiment, the optical assembly includes an input collimating lens positioned for receiving the input optical signal from the input optical fiber and an output collimating lens positioned for providing the output optical signal to the output optical fiber.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. This embodiment further includes a housing for retaining the optical assembly, and the input port and the output port are formed as an integral part of the housing.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. This embodiment further includes a housing for retaining the optical assembly, and the input port and the output port are formed as an integral part of the housing. In this embodiment, the input port and the output port extend from the housing.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. This embodiment further includes a housing for retaining the optical assembly, and the input port and the output port are formed as an integral part of the housing. In this embodiment, the input port and the output port are recessed in the housing.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. This embodiment further includes a housing for retaining the optical assembly, and the input port and the output port are formed as an integral part of the housing. In this embodiment the housing is made of one of a metal and a plastic.

In another embodiment, the present invention includes an optical device. The optical device includes an optical submodule. The optical submodule includes an optical assembly, an input port for accepting an input optical fiber and retaining the input optical fiber in a proper orientation with respect to the optical assembly, and an output port for accepting an output optical fiber and retaining the output optical fiber in a proper orientation with respect to the optical assembly, wherein the input optical fiber provides an input optical signal to the optical assembly and the output optical fiber receives an output optical signal from the optical assembly. The optical device further includes a light source module coupled to the input optical fiber, the light source module providing the input optical signal to the input optical fiber. The optical device also includes a light receiver module coupled to the output optical fiber, the light receiver module receiving the output optical signal. In this embodiment the input and output optical fibers are respectively retained within the input and output ports with an adhesive.

In another embodiment, the present invention includes an optical link for coupling a first optical submodule to a second optical submodule. The optical link includes a housing. The housing includes an input port for receiving a first optical submodule and an associated input optical signal; and an output port for receiving a second optical submodule and providing an output optical signal to the second optical submodule. The optical link further includes an optical spatial filter contained within the housing for filtering the input optical signal.
In another embodiment, the present invention includes an optical link for coupling a first optical submodule to a second optical submodule. The optical link includes a housing. The housing includes an input port for receiving a first optical submodule and an associated input optical signal; and an output port for receiving a second optical submodule and providing an output optical signal to the second optical submodule. The optical link further includes an optical spatial filter contained within the housing for filtering the input optical signal. In this embodiment, the first optical submodule includes a first collimating lens for collimating the input optical signal and the second optical submodule includes a second collimating lens for collimating the output optical signal.

In another embodiment, the present invention includes an optical submodule. The optical submodule incudes an optical assembly and an input port for accepting an input optical fiber and retaining the input optical fiber in proper orientation with respect to the optical assembly. The optical submodule further includes an output port for accepting an output optical fiber and retaining the output optical fiber in proper orientation with respect to the optical assembly. In this embodiment, the input optical fiber provides an input optical signal to the optical assembly and the output optical fiber receives an output optical signal from the optical assembly. The input and output optical fibers each include a properly oriented collimating lens.

In another embodiment, the present invention includes an optical submodule. The optical submodule incudes an optical assembly and an input port for accepting an input optical fiber and retaining the input optical fiber in proper orientation with respect to the optical assembly. The optical submodule further includes an output port for accepting an output optical fiber and retaining the output optical fiber in proper orientation with respect to the optical assembly. In this embodiment, the input optical fiber provides an input optical signal to the optical assembly and the output optical fiber receives an output optical signal from the optical assembly. The input and output optical fibers each include a properly oriented collimating lens. In this embodiment the optical assembly includes at least one of an optical isolator chip, an optical circulator chip, a gain flattening filter, a thin film filter, a variable optical attenuator, a polarization beam splitter, a wavelength plate, a prism, a grating, a mirror, a dynamically adjustable active optical material and a polarizing material.

In another embodiment, the present invention includes an optical submodule. The optical submodule incudes an optical assembly and an input port for accepting an input optical fiber and retaining the input optical fiber in proper orientation with respect to the optical assembly. The optical submodule further includes an output port for accepting an output optical fiber and retaining the output optical fiber in proper orientation with respect to the optical assembly. In this embodiment, the input optical fiber provides an input optical signal to the optical assembly and the output optical fiber receives an output optical signal from the optical assembly. The input and output optical fibers each include a properly oriented collimating lens. The optical submodule further includes a housing for retaining the optical assembly, wherein the input port and the output port are formed as an integral part of the housing.

In another embodiment, the present invention includes an optical submodule. The optical submodule incudes an optical assembly and an input port for accepting an input optical fiber and retaining the input optical fiber in proper orientation with respect to the optical assembly. The optical submodule further includes an output port for accepting an output optical fiber and retaining the output optical fiber in proper orientation with respect to the optical assembly. In this embodiment, the input optical fiber provides an input optical signal to the optical assembly and the output optical fiber receives an output optical signal from the optical assembly. The input and output optical fibers each include a properly oriented collimating lens. The optical submodule further includes a housing for retaining the optical assembly, wherein the input port and the output port are formed as an integral part of the housing. In this embodiment, the input port and the output port extend from the housing.

In another embodiment, the present invention includes an optical submodule. The optical submodule incudes an optical assembly and an input port for accepting an input optical fiber and retaining the input optical fiber in proper orientation with respect to the optical assembly. The optical submodule further includes an output port for accepting an output optical fiber and retaining the output optical fiber in proper orientation with respect to the optical assembly. In this embodiment, the input optical fiber provides an input optical signal to the optical assembly and the output optical fiber receives an output optical signal from the optical assembly. The input and output optical fibers each include a properly oriented collimating lens. The optical submodule further includes a housing for retaining the optical assembly, wherein the input port and the output port are formed as an integral part of the housing. In this embodiment the input port and the output port are recessed in the housing.

In another embodiment, the present invention includes an optical submodule. The optical submodule incudes an optical assembly and an input port for accepting an input optical fiber and retaining the input optical fiber in proper orientation with respect to the optical assembly. The optical submodule further includes an output port for accepting an output optical fiber and retaining the output optical fiber in proper orientation with respect to the optical assembly. In this embodiment, the input optical fiber provides an input optical signal to the optical assembly and the output optical fiber receives an output optical signal from the optical assembly. The input and output optical fibers each include a properly oriented collimating lens. The optical submodule further includes a housing for retaining the optical assembly, wherein the input port and the output port are formed as an integral part of the housing. In this embodiment the housing is made of one of a metal and a plastic.

In another embodiment, the present invention includes an optical submodule. The optical submodule incudes an optical assembly and an input port for accepting an input optical fiber and retaining the input optical fiber in proper orientation with respect to the optical assembly. The optical submodule further includes an output port for accepting an output optical fiber and retaining the output optical fiber in proper orientation with respect to the optical assembly. In this embodiment, the input optical fiber provides an input optical signal to the optical assembly and the output optical fiber receives an output optical signal from the optical assembly. The input and output optical fibers each include a properly oriented collimating lens. In this embodiment the input and output optical fibers are respectively retained within the input and output ports with an adhesive.

It will become apparent to those skilled in the art that various modifications to the preferred embodiment of the invention as described herein can be made without departing from the scope of the invention as defined by the appended claims.

## Claims

1. An optical submodule, comprising:
an optical assembly;
an input port for accepting an input optical fiber and retaining the input optical fiber in proper orientation with respect to the optical assembly; and
an output port for accepting an output optical fiber and retaining the output optical fiber in proper orientation with respect to the optical assembly, wherein the input optical fiber provides an input optical signal to the optical assembly and the output optical fiber receives an output optical signal from the optical assembly.

2. The optical submodule of claim 1 in combination with input and output optical fibers each including a properly oriented collimating lens.

3. An optical device, comprising:
an optical submodule, including:
an optical assembly;
an input port for accepting an input optical fiber and retaining the input optical fiber in a proper orientation with respect to the optical assembly; and
an output port for accepting an output optical fiber and retaining the output optical fiber in a proper orientation with respect to the optical assembly,
an input optical fiber which provides an input optical signal to the optical assembly and an output optical fiber which receives an output optical signal from the optical assembly;
a light source module coupled to the input optical fiber, the light source module providing the input optical signal to the input optical fiber; and
a light receiver module coupled to the output optical fiber, the light receiver module receiving the output optical signal.

4. The optical device of claim 3, wherein the input and output optical fibers each include a collimating lens.

5. The optical submodule of claim 1 or the optical device of claim 3, wherein the optical assembly includes an input collimating lens positioned for receiving the input optical signal from the input optical fiber and an output collimating lens positioned for providing the output optical signal to the output optical fiber.

6. The optical submodule of claim for the optical device of claim 3, wherein the optical assembly includes at least one of an optical isolator chip, an optical circulator chip, a gain flattening filter, a thin film filter, a variable optical attenuator, a polarization beam splitter, a wavelength plate, a prism, a grating, a mirror, a dynamically adjustable active optical material and a polarizing material.

7. The optical submodule of claim 1 or the optical device of claim 3, further including:
a housing for retaining the optical assembly, wherein the input port and the output port are formed as an integral part of the housing.

8. The optical submodule of claim 2or the optical device of claim 3, wherein the input and output optical fibers are respectively retained within the input and output ports with an adhesive.

9. An optical link for coupling a first optical submodule to a second optical submodule, comprising:
a housing including:
an input port for receiving a first optical submodule and an associated input optical signal; and
an output port for receiving a second optical submodule and providing an output optical signal to the second optical submodule; and
an optical spatial filter contained within the housing for filtering the input optical signal.

10. The optical link of claim 9, wherein the first optical submodule includes a first collimating lens for collimating the input optical signal and wherein the second optical submodule includes a second collimating lens for collimating the output optical signal.
